# EUROPEAN PATENT APPLICATION

(11) **EP 4 328 420 A1**
(43) Date of publication of application: **28.02.2024**
(21) Application number: 22882322.5
(22) Date of filing: 21.06.2022
(51) Int. Cl.: F01D 15/10, F01K 11/02, F01K 25/10, F25B 15/02

(54) **ADJUSTABLE COMBINED COOLING AND POWER SUPPLY SYSTEM, PROCESS THEREOF AND OPERATION METHOD THEREFOR**

(30) Priority: 19.10.2021 CN 202111213510
(71) Applicant: Anhui Metaenergy Technologies Co.Ltd., Hefei, Anhui 230000 (CN)
(72) Inventor: ZHU, Linghui, Hefei, Anhui 230000 (CN); WANG, Desheng, Hefei, Anhui 230000 (CN)
(74) Representative: Tarkpea, Pia
(86) International application number: PCT/CN2022/099997
(87) International publication number: WO 2023/065699

(57) **Abstract**

An adjustable combined cooling and power supply system, a process thereof and an operation method therefor, which belong to the technical field of absorption refrigeration. The system includes at least one stage of generator, absorber, condenser, heat exchanger, evaporator, turbine, power generator and compressor. The turbine is located between a gaseous refrigerant outlet of the generator and a gaseous refrigerant inlet of the condenser; the compressor is located between a gaseous refrigerant outlet of the evaporator and a gaseous refrigerant inlet of the absorber; a turbine shaft of the turbine is connected to an input shaft of the power generator; a power supply end of the power generator is connected to the compressor; the heat exchanger is located in front of a cooling water inlet of the condenser; cooling water passes through a pipe pass of the heat exchanger; and an inlet and outlet of a housing pass are connected to a refrigerant outlet pipe of the evaporator. In the system, a heat source of a higher temperature is directly used, which improves the efficiency of the system, decreases the refrigeration temperature, avoids rectification, simplifies the refrigeration process procedure, improves the heat efficiency of the system, and avoids the problem of performance attenuation caused by the system running for a long time.

## Description

This patent application claims the benefit and priority of Chinese Patent Application No. 202111213510.3 filed with the China National Intellectual Property Administration on October 19, 2021 and entitled "ADJUSTABLE COMBINED COOLING AND POWER SUPPLY SYSTEM, PROCESS THEREOF AND OPERATION METHOD THEREFOR", the disclosure of which is incorporated by reference herein in its entirety as part of the present application.

### TECHNICAL FIELD

The present disclosure relates to the technical field of absorption refrigeration, in particular to an adjustable combined cooling and power supply system, a process and an operation method thereof.

### BACKGROUND

Waste heat refrigeration is a technology that uses gas or waste gas, waste liquid in the production process and heat discharged from some power machines as energy to drive the absorption refrigerator for refrigeration. Waste heat refrigeration is a technology of absorption refrigeration, and is compensated by consuming heat energy. This heat energy is mainly low-level heat energy. The absorption refrigeration device includes a generator, a condenser, an evaporator, an absorber, a circulating pump, a throttle valve and other components. Working media include a refrigerant for preparing cold capacity and an absorbent for absorbing and desorbing the refrigerant. The refrigerant and the absorbent constitute a working media pair. Existing waste heat refrigeration systems are circulated based on lithium bromide and water or ammonia water and ammonia as a working media pair. The refrigeration system of lithium bromide and water uses water as a refrigerant. Because the triple point of water is about 0°C, the evaporation temperature of the refrigeration system is higher than 0°C, so sub-zero cold energy cannot be produced. The refrigeration system of ammonia water and ammonia needs distillation treatment for desorbed gaseous ammonia because the boiling points of ammonia and water are small in difference, so that energy consumption is increased, and the performance can be reduced after long-term operation. The refrigeration temperature of the refrigeration system of lithium bromide and water is higher, the refrigeration efficiency of the refrigeration system of ammonia water and ammonia is lower, and the process is obvious in shortcomings. In the prior art, the waste heat refrigeration system is improved, and a combined cooling, heating and power supply refrigeration system is designed, but there is no compressor at the inlet of the absorber of the system, so cooling load and power generation load cannot be self-adjusted. The refrigeration system uses conventional refrigerant working medium pairs, so the system efficiency is low. Although the waste heat refrigeration system is improved based on the waste heat refrigeration power generation system, but the operating efficiency of the system can be greatly reduced, and self-adjustment cannot be realized when the change in cooling and power requirements is great. Therefore, an adjustable combined cooling and power supply system, a process and an operation method thereof are provided to solve the problems.

### SUMMARY

Aiming to solve the above mentioned problem, the present disclosure provides adjustable combined cooling and power supply system, a process and an operation method thereof. The adjustable combined cooling and power supply system is simple in structure and reasonable in design.

The technical scheme of the present disclosure is as follows.

An adjustable combined cooling and power supply system includes at least one stage of generator, an absorber, a condenser, a first-stage heat exchanger, an evaporator, a turbine, a power generator and a compressor, where the turbine is located between a gaseous refrigerant outlet of the at least one stage of generator and a gaseous refrigerant inlet of the condenser, the compressor is located between a gaseous refrigerant outlet of the evaporator and a gaseous refrigerant inlet of the absorber, a turbine shaft of the turbine is connected to an input shaft of the power generator, a high-temperature and high-pressure gaseous refrigerant does work through expansion in the turbine so as to drive the power generator to generate power, a power supply end of the power generator is connected to the compressor, the compressor is used for compressing and boosting a low-pressure gaseous refrigerant discharged from the evaporator, the boosted gaseous refrigerant enters the absorber, the first-stage heat exchanger is located in front of a cooling water inlet of the condenser, a pipe pass of the first-stage heat exchanger is configured to allow cooling water to flow through, an inlet and an outlet of a housing pass of the first-stage heat exchanger are connected to secondary refrigerant outlet pipes of the evaporator, and the cooling water entering the condenser is refrigerated by a cooled secondary refrigerant in the evaporator.

As a further optimization scheme of the present disclosure, a lean liquid outlet of the at least one stage of generator is connected to a lean liquid inlet of the absorber, a rich liquid outlet of the absorber is connected to a rich liquid inlet of the at least one stage of generator through a rich liquid pump, the gaseous refrigerant outlet of the at least one stage of generator is connected to the gaseous refrigerant inlet of the condenser through the turbine, a liquid refrigerant outlet of the condenser is connected to a liquid refrigerant inlet of the evaporator through a storage tank, and the gaseous refrigerant outlet of the evaporator is connected to the gaseous refrigerant inlet of the absorber through the compressor.

As a further optimization scheme of the present disclosure, a liquid refrigerant outlet of the condenser is connected to a liquid refrigerant inlet of the evaporator through a storage tank and a GVX heat exchanger in turn, the gaseous refrigerant outlet of the evaporator is connected to the gaseous refrigerant inlet of the absorber through the GVX heat exchanger and the compressor in turn, and heat exchange between a liquid refrigerant and the gaseous refrigerant is used for cooling the liquid refrigerant and heating the gaseous refrigerant.

As a further optimization scheme of the present disclosure, the at least one stage of generator includes one stage of generator, a lean liquid outlet of the one stage of generator is connected to a lean liquid inlet of the absorber through a GAX heat exchanger and a pressure reducing valve in turn, a rich liquid outlet of the absorber is connected to a rich liquid inlet of the one stage of the generator through a rich liquid pump and the GAX heat exchanger in turn, and heat exchange between rich liquid and lean liquid is used for heating the rich liquid and supercooling the lean liquid.

As a further optimization scheme of the present disclosure, the at least one stage of generator includes two stages of generators including a first-stage generator and a second-stage generator, the first-stage generator and the second-stage generator circularly use the same group of heat sources, the heat sources enter the first-stage generator and then enter the second-stage generator, a lean liquid outlet of the first-stage generator is connected to a lean liquid inlet of the absorber, a gaseous refrigerant outlet of the first-stage generator is connected to the gaseous refrigerant inlet of the condenser through the turbine, a working medium solution outlet of the second-stage generator is connected to a working medium solution inlet of the first-stage generator through a working medium pump, a rich liquid outlet of the absorber is connected to a rich liquid inlet of the second-stage generator through a rich liquid pump, and a gaseous refrigerant outlet of the second-stage generator is connected to the gaseous refrigerant inlet of the condenser.

As a further optimization scheme of the present disclosure, the lean liquid outlet of the first-stage generator is connected to the lean liquid inlet of the absorber through a first-stage GAX heat exchanger and a second-stage GAX heat exchanger in turn, the working medium solution outlet of the second-stage generator is connected to the working medium solution inlet of the first-stage generator through the working medium pump and the first-stage GAX heat exchanger in turn, and the rich liquid outlet of the absorber is connected to the rich liquid inlet of the second-stage generator through the rich liquid pump and the second-stage GAX heat exchanger in turn.

The present disclosure also provides the following scheme.

An adjustable combined cooling and power supply process is realized by the adjustable combined cooling and power supply system mentioned above, where in a cyclic process of a refrigerant, the high-temperature and high-pressure gaseous refrigerant of the at least one stage of generator does work through expansion in the turbine to drive the power generator to generate power and supply power to the compressor, the low-pressure gaseous refrigerant discharged from the evaporator is compressed and boosted by the compressor, the boosted gaseous refrigerant enters the absorber, and the secondary refrigerant exchanges heat with the cooling water recycling in the condenser through the first-stage heat exchanger to realize stepless adjustment of refrigeration and power generation.

The present disclosure also provides the following scheme.

An operation method of an adjustable combined cooling and power supply system uses the adjustable combined cooling and power supply system, and includes the following steps.

Firstly, making a working medium solution of a rich liquid pump enter the at least one stage of generator to start atomization, and establishing working medium circulation; when the at least one stage of generator reaches a certain liquid level, providing a heat source to enter the at least one stage of generator so as to evaporate an amount of a gaseous refrigerant required by the system, and preparing to establish refrigerant circulation.

Secondly, making the refrigerant flow through the condenser, the evaporator, the absorber and the at least one stage of generator, contacting the atomized working medium solution in the at least one stage of generator indirectly with the heat source which has a high temperature for heat and mass transfer, evaporating a gaseous refrigerant in the working medium solution out of the at least one stage of generator, making the high-temperature and high-pressure gaseous refrigerant do work through expansion in the turbine to drive the power generator to generate power for the compressor and then enter the condenser for condensation, making a condensed liquid refrigerant enter the evaporator to exchange heat with the secondary refrigerant, making the gaseous refrigerant formed by evaporation of the liquid refrigerant enter the absorber after compression and boosting by the compressor and be mixed with the working medium solution in the absorber and pumped into the at least one stage of generator by the rich liquid pump, so that the refrigerant circulation is established.

Thirdly, adjusting a value of the refrigerating capacity, when a user side needs to adjust a refrigerating capacity of the secondary refrigerant; when a refrigeration load is reduced, making a cooled secondary refrigerant enter the first-stage heat exchanger to exchange heat with the cooling water circulating in the condenser, so that a condensation temperature of the system is reduced, a pressure difference between an inlet and an outlet of the turbine is increased, and a power generation capacity of the power generator is increased; when the refrigeration load is increased, using power output by the power generator by the compressor at the gaseous refrigerant inlet of the absorber, so that an evaporation pressure can be reduced, an absorption pressure is increased, an absorption effect is enhanced, an output temperature of the secondary refrigerant can be reduced, and the refrigerating capacity can be improved; when an adjustment result reaches the value of the refrigerating capacity at the user side, a refrigeration system is not adjusted any more, and the working fluid solution and a refrigerant system reach a new balance.

Compared with the prior art, some embodiments have the following advantages.

According to an adjustable combined cooling and power supply system provided by some embodiments, a heat source with a higher temperature is directly used, which improves the efficiency of the system. The system takes a TC working medium and ammonia as a working media pair, so that the refrigeration temperature is decreased. Components of the TC working medium and ammonia are free of water or oil, so that rectification is avoided. The refrigeration process procedure is simplified, the heat efficiency of the system is improved, and the problem of performance attenuation caused by the system running for a long time is avoided. Through adjustment of cooling load and turbine-compressor load, full conversion between the refrigeration system and the power generation system can be realized by stepless adjustment.

### BRIEF DESCRIPTION OF THE DRAWINGS

The present disclosure is further described below in combination with the attached figures.
FIG. 1 is a process diagram of an adjustable combined cooling and power supply system in the first embodiment of the present disclosure.
FIG. 2 is a process diagram of an adjustable combined cooling and power supply system in the second embodiment of the present disclosure.

### DETAILED DESCRIPTION OF THE EMBODIMENTS

The technical solutions in the embodiments of the present disclosure will be described clearly and completely hereinafter with reference to the drawings of the embodiments of the present disclosure. Apparently, the described embodiments are some embodiments of the present disclosure, rather than all of the embodiments. Based on the embodiments of the present disclosure, all other embodiments obtained by those skilled in the art without paying creative labor fall in the scope of protection of the present disclosure..

In order to make the above objects, features and advantages of the present disclosure more obvious and understandable, the present disclosure will be further explained in detail hereinafter with reference to the drawings and specific embodiments.

### Embodiment I

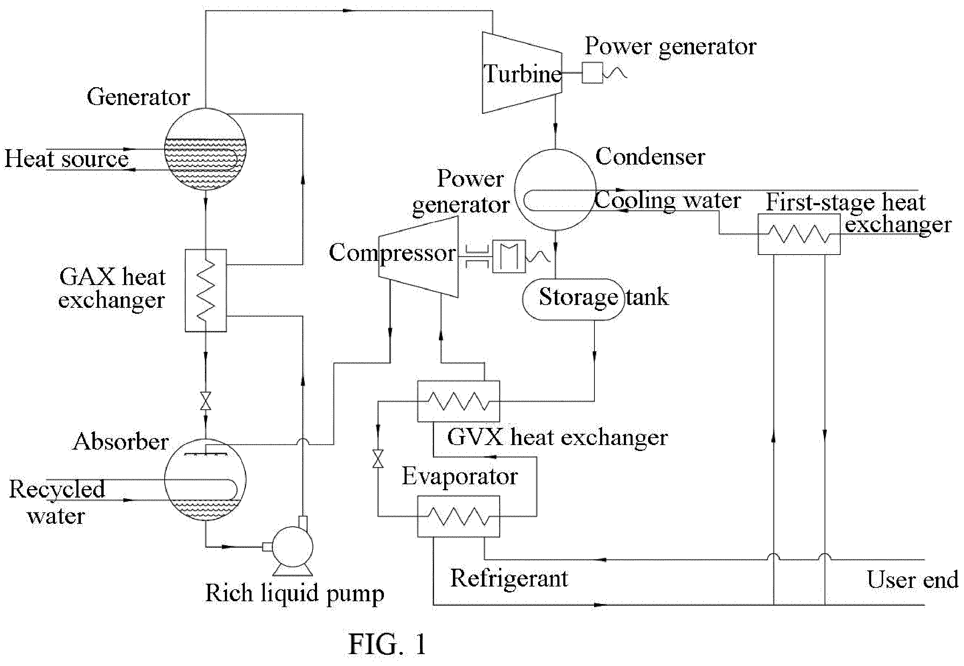

As shown in FIG. 1, an adjustable combined cooling and power supply system in the embodiment includes at least one stage of generator, an absorber, a condenser, a first-stage heat exchanger, an evaporator, a turbine, a power generator and a compressor, where the turbine is located between a gaseous refrigerant outlet of the at least one stage of generator and a gaseous refrigerant inlet of the condenser, the compressor is located between a gaseous refrigerant outlet of the evaporator and a gaseous refrigerant inlet of the absorber, a turbine shaft of the turbine is connected to an input shaft of the power generator, a high-temperature and high-pressure gaseous refrigerant does work through expansion in the turbine so as to drive the power generator to generate power, a power supply end of the power generator is connected to the compressor, the compressor is used for compressing and boosting a low-pressure gaseous refrigerant discharged from the evaporator, the boosted gaseous refrigerant enters the absorber, the first-stage heat exchanger is located in front of a cooling water inlet of the condenser, a pipe pass of the first-stage heat exchanger is configured to allow cooling water to flow through, an inlet and an outlet of a housing pass of the first-stage heat exchanger are connected to secondary refrigerant outlet pipes of the evaporator, and the cooling water entering the condenser is refrigerated by a cooled secondary refrigerant in the evaporator.

A liquid refrigerant outlet of the condenser is connected to a liquid refrigerant inlet of the evaporator through a storage tank and a GVX heat exchanger in turn, the gaseous refrigerant outlet of the evaporator is connected to the gaseous refrigerant inlet of the absorber through the GVX heat exchanger and the compressor in turn, and heat exchange between a liquid refrigerant and the gaseous refrigerant is used for cooling the liquid refrigerant and heating the gaseous refrigerant.

A lean liquid outlet of the one stage of generator is connected to a lean liquid inlet of the absorber through a GAX heat exchanger and a pressure reducing valve in turn, a rich liquid outlet of the absorber is connected to a rich liquid inlet of the one stage of the generator through a rich liquid pump and the GAX heat exchanger in turn, and heat exchange between rich liquid and lean liquid is used for heating the rich liquid and supercooling the lean liquid.

A lean liquid outlet of the at least one stage of generator is connected to a lean liquid inlet of the absorber, a rich liquid outlet of the absorber is connected to a rich liquid inlet of the at least one stage of generator through a rich liquid pump, the gaseous refrigerant outlet of the at least one stage of generator is connected to the gaseous refrigerant inlet of the condenser through the turbine, a liquid refrigerant outlet of the condenser is connected to a liquid refrigerant inlet of the evaporator through a storage tank, and the gaseous refrigerant outlet of the evaporator is connected to the gaseous refrigerant inlet of the absorber through the compressor.

When a high-temperature heat source enters the generator, a rich ammonia solution is heated, and gaseous ammonia is separated out under high pressure. A desorbed poor ammonia solution enters the GAX heat exchanger to exchange heat with the rich ammonia solution from the absorber, and enters the absorber through the pressure reducing valve after cooling. The gaseous ammonia from evaporator refrigeration is absorbed by the poor ammonia solution. Heat in the absorption process is taken away by circulating cooling water, so that the poor ammonia solution forms the rich ammonia solution after absorption. The rich ammonia solution enters the GAX heat exchanger after being boosted by the rich liquid pump, exchanges heat with the high-temperature poor ammonia solution from the generator, and enters the generator after heating up. So that the solution circulation is completed.

The high-temperature and high-pressure gaseous ammonia desorbed from the generator enters the turbine to do work through expansion, and the power generator is driven to generate power for an internal motor and a compressor of a power generator unit. Waste steam after doing work enters the condenser, is condensed into liquid ammonia by the circulating cooling water from the outside, and then enters the storage tank. The saturated liquid ammonia from the storage tank enters the GVX heat exchanger and exchanges heat with the gaseous ammonia from the evaporator. The cooled liquid ammonia enters the evaporator after passing through the pressure reducing valve, exchanges heat with the external secondary refrigerant, and the cooled secondary refrigerant exits the system. Heat exchanges between the gasified gaseous ammonia and the liquid ammonia from storage tank. The gaseous ammonia after heat exchange enters the compressor for compression. The energy of motor relies on the turbine for doing work and generating power. The gaseous ammonia after boosting enters the absorber for absorption. So that the ammonia system circulation is completed.

The cooled secondary refrigerant enters the first-stage heat exchanger to exchange heat with the circulating cooling water of the condenser, so that the condensation temperature of the condenser is reduced. At the same time, the condensing pressure is decreased, the pressure difference between the inlet and the outlet of the turbine is increased, the power generation capacity is increased, and excess refrigerating capacity is converted into power generation. A power generation end of the power generator is connected to the power grid, and the generated power is transmitted to the power grid or the internal motor for use. When self-generating electricity is used for the internal compressor, the refrigeration temperature can be reduced, the refrigerating capacity can be increased, and the power generation capacity can be reduced.

### Embodiment II

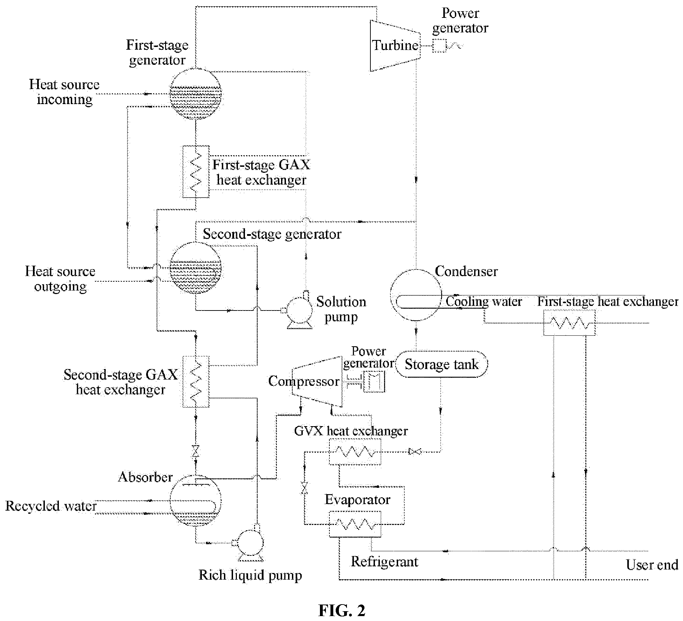

As shown in FIG. 2, according to an adjustable combined cooling and power supply system in the embodiment, two stages of generators are provided, including a first-stage generator and a second-stage generator, and the system also includes an absorber, a condenser, a first-stage heat exchanger, an evaporator, a turbine, a power generator and a compressor, where the turbine is located between a gaseous refrigerant outlet of the at least one stage of generator and a gaseous refrigerant inlet of the condenser, the compressor is located between a gaseous refrigerant outlet of the evaporator and a gaseous refrigerant inlet of the absorber, a turbine shaft of the turbine is connected to an input shaft of the power generator, a high-temperature and high-pressure gaseous refrigerant does work through expansion in the turbine so as to drive the power generator to generate power, a power supply end of the power generator is connected to the compressor, the compressor is used for compressing and boosting a low-pressure gaseous refrigerant discharged from the evaporator, the boosted gaseous refrigerant enters the absorber, the first-stage heat exchanger is located in front of a cooling water inlet of the condenser, a pipe pass of the first-stage heat exchanger is configured to allow cooling water to flow through, an inlet and an outlet of a housing pass of the first-stage heat exchanger are connected to secondary refrigerant outlet pipes of the evaporator, and the cooling water entering the condenser is refrigerated by a cooled secondary refrigerant in the evaporator.

The first-stage generator and the second-stage generator circularly use the same group of heat sources, the heat sources enter the first-stage generator and then enter the second-stage generator, a lean liquid outlet of the first-stage generator is connected to a lean liquid inlet of the absorber, a gaseous refrigerant outlet of the first-stage generator is connected to the gaseous refrigerant inlet of the condenser through the turbine, a working medium solution outlet of the second-stage generator is connected to a working medium solution inlet of the first-stage generator through a working medium pump, a rich liquid outlet of the absorber is connected to a rich liquid inlet of the second-stage generator through a rich liquid pump, and a gaseous refrigerant outlet of the second-stage generator is connected to the gaseous refrigerant inlet of the condenser.

The lean liquid outlet of the first-stage generator is connected to the lean liquid inlet of the absorber through a first-stage GAX heat exchanger and a second-stage GAX heat exchanger in turn, the working medium solution outlet of the second-stage generator is connected to the working medium solution inlet of the first-stage generator through the working medium pump and the first-stage GAX heat exchanger in turn, and the rich liquid outlet of the absorber is connected to the rich liquid inlet of the second-stage generator through the rich liquid pump and the second-stage GAX heat exchanger in turn.

When a high-temperature heat source enters the first-stage generator, a rich ammonia solution is heated, and gaseous ammonia is separated out under high pressure. A desorbed poor ammonia solution enters the first-stage GAX heat exchanger to exchange heat with the working medium solution from the second-stage generator, and enters the second-stage GAX heat exchanger after heat exchange. The desorbed poor ammonia solution exchanges heat with the rich ammonia solution from the absorber, and enters the absorber through the pressure reducing valve after cooling. The gaseous ammonia from evaporator refrigeration is absorbed by the poor ammonia solution. Heat in the absorption process is taken away by circulating cooling water, so that the poor ammonia solution forms the rich ammonia solution after absorption. The rich ammonia solution enters the second-stage GAX heat exchanger after being boosted by the rich liquid pump, exchanges heat with the high-temperature poor ammonia solution from the first-stage generator, and enters the second-stage generator after heating up. The heat source enters the second-stage generator from the first-stage generator to heat the working medium solution in the second-stage generator. The incompletably desorbed working medium solution enters the first-stage generator through a working medium solution pump and the first-stage GAX heat exchanger. So that the solution circulation is completed.

The high-temperature and high-pressure gaseous ammonia desorbed from the first-stage generator enters the turbine to do work through expansion, and the power generator is driven to generate power for an internal motor and a compressor of a power generator unit. Waste steam after doing work is mixed with the gaseous ammonia desorbed from the second-stage generator, enters the condenser, is condensed into liquid ammonia by the circulating cooling water from the outside, and then enters the storage tank. The saturated liquid ammonia from the storage tank enters the GVX heat exchanger and exchanges heat with the gaseous ammonia from the evaporator. The cooled liquid ammonia enters the evaporator after passing through the pressure reducing valve, exchanges heat with the external secondary refrigerant, and the cooled secondary refrigerant exits the system. Heat exchanges between the gasified gaseous ammonia and the liquid ammonia from storage tank. The gaseous ammonia after heat exchange enters the compressor for compression. The power generator does work by the turbine to generate power. The gaseous ammonia after boosting enters the absorber for absorption. So that the ammonia system circulation is completed.

In the embodiment, two stages of generator are used. While the high-temperature heat source is utilized, the heat source can be utilized to a lower temperature due to the temperature gradients of two-stage desorption, so that the high-temperature heat source can be fully utilized.

The present disclosure based on an absorption refrigeration system has combined with an existing combined cooling and power supply technology. In the cyclic process of a refrigerant, a high-temperature and high-pressure gaseous refrigerant of a generator does work through expansion in a turbine to drive a power generator to generate power and supply power to a compressor. A low-pressure gaseous refrigerant discharged from an evaporator is compressed and boosted by the compressor. The boosted gaseous refrigerant enters an absorber so as to realize stepless adjustment of refrigeration and power generation.

The operation method of the adjustable combined cooling and power supply system includes the following steps.

Firstly, making a working medium solution of a rich liquid pump enter the at least one stage of generator to start atomization, and establishing working medium circulation; when the at least one stage of generator reaches a certain liquid level, providing a heat source to enter the at least one stage of generator so as to evaporate an amount of a gaseous refrigerant required by the system, and preparing to establish refrigerant circulation;

Secondly, making the refrigerant flow through the condenser, the evaporator, the absorber and the at least one stage of generator, contacting the atomized working medium solution in the at least one stage of generator indirectly with the heat source which has a high temperature for heat and mass transfer, evaporating a gaseous refrigerant in the working medium solution out of the at least one stage of generator, making the high-temperature and high-pressure gaseous refrigerant do work through expansion in the turbine to drive the power generator to generate power for the compressor and then enter the condenser for condensation, making a condensed liquid refrigerant enter the evaporator to exchange heat with the secondary refrigerant, making the gaseous refrigerant formed by evaporation of the liquid refrigerant enter the absorber after compression and boosting by the compressor and be mixed with the working medium solution in the absorber and pumped into the at least one stage of generator by the rich liquid pump, so that the refrigerant circulation is established; and

Thirdly, adjusting a value of the refrigerating capacity, when a user side needs to adjust a refrigerating capacity of the secondary refrigerant; when a refrigeration load is reduced, making a cooled secondary refrigerant enter the first-stage heat exchanger to exchange heat with the cooling water circulating in the condenser, so that a condensation temperature of the system is reduced, a pressure difference between an inlet and an outlet of the turbine is increased, and a power generation capacity of the power generator is increased; when the refrigeration load is increased, using power output by the power generator by the compressor at the gaseous refrigerant inlet of the absorber, so that an evaporation pressure can be reduced, an absorption pressure is increased, an absorption effect is enhanced, an output temperature of the secondary refrigerant can be reduced, and the refrigerating capacity can be improved; when an adjustment result reaches the value of the refrigerating capacity at the user side, a refrigeration system is not adjusted any more, and the working fluid solution and a refrigerant system reach a new balance.

Only the preferred embodiments of the present disclosure have been described in detail above, but the present disclosure is not limited to the embodiments described above, and various changes may be made within the knowledge of those skilled in the art without departing from the spirit of the present disclosure.

## Claims

1. An adjustable combined cooling and power supply system, comprising at least one stage of generator, an absorber, a condenser, a first-stage heat exchanger, an evaporator, a turbine, a power generator and a compressor, wherein the turbine is located between a gaseous refrigerant outlet of the at least one stage of generator and a gaseous refrigerant inlet of the condenser, the compressor is located between a gaseous refrigerant outlet of the evaporator and a gaseous refrigerant inlet of the absorber, a turbine shaft of the turbine is connected to an input shaft of the power generator, a high-temperature and high-pressure gaseous refrigerant does work through expansion in the turbine so as to drive the power generator to generate power, a power supply end of the power generator is connected to the compressor, the compressor is used for compressing and boosting a low-pressure gaseous refrigerant discharged from the evaporator, the boosted gaseous refrigerant enters the absorber, the first-stage heat exchanger is located in front of a cooling water inlet of the condenser, a pipe pass of the first-stage heat exchanger is configured to allow cooling water to flow through, an inlet and an outlet of a housing pass of the first-stage heat exchanger are connected to secondary refrigerant outlet pipes of the evaporator, and the cooling water entering the condenser is refrigerated by a cooled secondary refrigerant in the evaporator.

2. The adjustable combined cooling and power supply system according to claim 1, wherein a lean liquid outlet of the at least one stage of generator is connected to a lean liquid inlet of the absorber, a rich liquid outlet of the absorber is connected to a rich liquid inlet of the at least one stage of generator through a rich liquid pump, the gaseous refrigerant outlet of the at least one stage of generator is connected to the gaseous refrigerant inlet of the condenser through the turbine, a liquid refrigerant outlet of the condenser is connected to a liquid refrigerant inlet of the evaporator through a storage tank, and the gaseous refrigerant outlet of the evaporator is connected to the gaseous refrigerant inlet of the absorber through the compressor.

3. The adjustable combined cooling and power supply system according to claim 1, wherein a liquid refrigerant outlet of the condenser is connected to a liquid refrigerant inlet of the evaporator through a storage tank and a GVX heat exchanger in turn, the gaseous refrigerant outlet of the evaporator is connected to the gaseous refrigerant inlet of the absorber through the GVX heat exchanger and the compressor in turn, and heat exchange between a liquid refrigerant and the gaseous refrigerant is used for cooling the liquid refrigerant and heating the gaseous refrigerant.

4. The adjustable combined cooling and power supply system according to claim 1, wherein the at least one stage of generator comprises one stage of generator, a lean liquid outlet of the one stage of generator is connected to a lean liquid inlet of the absorber through a GAX heat exchanger and a pressure reducing valve in turn, a rich liquid outlet of the absorber is connected to a rich liquid inlet of the one stage of generator through a rich liquid pump and the GAX heat exchanger in turn, and heat exchange between rich liquid and lean liquid is used for heating the rich liquid and supercooling the lean liquid.

5. The adjustable combined cooling and power supply system according to claim 1, wherein the at least one stage of generator comprises two stages of generators including a first-stage generator and a second-stage generator, the first-stage generator and the second-stage generator circularly use the same group of heat sources, the heat sources enter the first-stage generator and then enter the second-stage generator, a lean liquid outlet of the first-stage generator is connected to a lean liquid inlet of the absorber, a gaseous refrigerant outlet of the first-stage generator is connected to the gaseous refrigerant inlet of the condenser through the turbine, a working medium solution outlet of the second-stage generator is connected to a working medium solution inlet of the first-stage generator through a working medium pump, a rich liquid outlet of the absorber is connected to a rich liquid inlet of the second-stage generator through a rich liquid pump, and a gaseous refrigerant outlet of the second-stage generator is connected to the gaseous refrigerant inlet of the condenser.

6. The adjustable combined cooling and power supply system according to claim 5, wherein the lean liquid outlet of the first-stage generator is connected to the lean liquid inlet of the absorber through a first-stage GAX heat exchanger and a second-stage GAX heat exchanger in turn, the working medium solution outlet of the second-stage generator is connected to the working medium solution inlet of the first-stage generator through the working medium pump and the first-stage GAX heat exchanger in turn, and the rich liquid outlet of the absorber is connected to the rich liquid inlet of the second-stage generator through the rich liquid pump and the second-stage GAX heat exchanger in turn.

7. An adjustable combined cooling and power supply process, realized by the adjustable combined cooling and power supply system according to any one of claims 1 to 6, wherein in a cyclic process of a refrigerant, the high-temperature and high-pressure gaseous refrigerant of the at least one stage of generator does work through expansion in the turbine to drive the power generator to generate power and supply power to the compressor, the low-pressure gaseous refrigerant discharged from the evaporator is compressed and boosted by the compressor, the boosted gaseous refrigerant enters the absorber, and the secondary refrigerant exchanges heat with the cooling water recycling in the condenser through the first-stage heat exchanger to realize stepless adjustment of refrigeration and power generation.

8. An operation method of the adjustable combined cooling and power supply system according to any one of claims 1 to 6, comprising following steps:
firstly, making a working medium solution of a rich liquid pump enter the at least one stage of generator to start atomization, and establishing working medium circulation; when the at least one stage of generator reaches a certain liquid level, providing a heat source to enter the at least one stage of generator so as to evaporate an amount of a gaseous refrigerant required by the system, and preparing to establish refrigerant circulation;
secondly, making the refrigerant flow through the condenser, the evaporator, the absorber and the at least one stage of generator, contacting the atomized working medium solution in the at least one stage of generator indirectly with the heat source which has a high temperature for heat and mass transfer, evaporating a gaseous refrigerant in the working medium solution out of the at least one stage of generator, making the high-temperature and high-pressure gaseous refrigerant do work through expansion in the turbine to drive the power generator to generate power for the compressor and then enter the condenser for condensation, making a condensed liquid refrigerant enter the evaporator to exchange heat with the secondary refrigerant, making the gaseous refrigerant formed by evaporation of the liquid refrigerant enter the absorber after compression and boosting by the compressor and be mixed with the working medium solution in the absorber and pumped into the at least one stage of generator by the rich liquid pump, so that the refrigerant circulation is established; and
thirdly, adjusting a value of the refrigerating capacity, when a user side needs to adjust a refrigerating capacity of the secondary refrigerant; when a refrigeration load is reduced, making a cooled secondary refrigerant enter the first-stage heat exchanger to exchange heat with the cooling water circulating in the condenser, so that a condensation temperature of the system is reduced, a pressure difference between an inlet and an outlet of the turbine is increased, and a power generation capacity of the power generator is increased; when the refrigeration load is increased, using power output by the power generator by the compressor at the gaseous refrigerant inlet of the absorber, so that an evaporation pressure can be reduced, an absorption pressure is increased, an absorption effect is enhanced, an output temperature of the secondary refrigerant can be reduced, and the refrigerating capacity can be improved; when an adjustment result reaches the value of the refrigerating capacity at the user side, a refrigeration system is not adjusted any more, and the working fluid solution and a refrigerant system reach a new balance.
